# EUROPEAN PATENT APPLICATION

(11) **EP 3 255 749 A1**
(43) Date of publication of application: **13.12.2017**
(21) Application number: 16174007.1
(22) Date of filing: 10.06.2016
(51) Int. Cl.: H02J 3/38

(54) **ADVANCED PERFORMANCE, OPTIMIZATION BASED CONTROL FOR PHOTOVOLTAIC POWER CONVERSION**

(71) Applicant: ABB Technology AG, 8050 Zürich (CH)
(72) Inventor: Martini, David, 52027 San Giovanni Valdarno (AR) (IT); Apeldoorn, Oscar, 5426 Lengnau (CH); Raboni, Pietro, 46030 Bigarello (IT); Mastellone, Silvia, 5415 Nussbaumen (CH); Almer, Stefan, 8046 Zürich (CH)
(74) Representative: ABB Patent Attorneys

(57) **Abstract**

The present invention provides a method for control of a power conversion system (112) of a solar power plant (110), whereby the power conversion system (112) comprises a DC/AC converter (114), which is connected between at least one solar panel (116) producing DC current and an AC power grid (118) using a control system (140), whereby the control system (140) comprises at least two control units (142), comprising the steps of controlling the power conversion system (112) based on measurement signals provided from the power conversion system (112) compared to an internal control reference and based on individual control parameters and protection parameters using the at least two control units (142), receiving at least one external input from outside of the power conversion system (112), and controlling at least one of the control reference, the control parameters and the protection parameters of the at least two control units (142) based on the at least one external input. The present invention further provides a control system (140) for a power conversion system (112) of a solar power plant (110), whereby the power conversion system (112) comprises a DC/AC converter (118), which is connected between at least one solar panel (114) producing DC current and an AC power grid (116), the control system (140) is adapted to perform the above method

## Description

### Technical Field

The present invention relates to the area of control of a power conversion system of a solar power plant, whereby the power conversion system comprises a DC/AC converter, which is connected between at least one solar panel producing DC current and an AC power grid. The present invention further relates to a control system for a power conversion system of a solar power plant, whereby the power conversion system comprises a DC/AC converter, which is connected between at least one solar panel producing DC current and an AC power grid.

### Background Art

Power conversion is important for connection of solar power plants to a power grid. The solar power plants may comprise photovoltaic (PV) systems of essentially any desired size, i.e. from private installation of few solar panels up to industrial installations comprising hundreds of thousands solar panels.

The same principles apply in general to wind power plants generating DC power. In this case, also a DC/AC conversion is required.

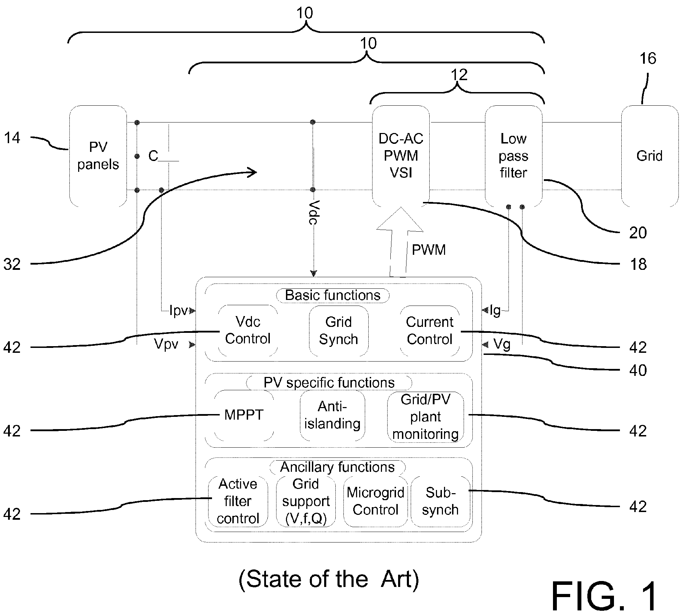

A typical solar power plant 10 can be seen in Fig.1. The solar power plant 10 comprises a power conversion system 12 and at least one solar panel 14 producing DC current. The power conversion system 12 is connected between the at least one solar panel 14 and an AC power grid 16, to which the solar power is injected. The power conversion system 12 comprises at least a DC/AC converter 18, also referred to as inverter, as central component.

The power conversion system 12 comprises by way of example a low pass filter 20, which is connected between the DC/AC converter 18 and the AC power grid 16. An optional DC/DC converter 22, also referred to as boost converter, is used to boost the DC voltage level provided by the at least one solar panel 14 within an allowable range for the DC/AC converter 18. Moreover, the use of the boost converter 22 offers flexibility to extract maximum power (Maximum Power Point Tracking , MPPT) from the at least one PV panel 14, which is a basic requirement for solar plants.

In an alternative implementation, the functionality of the DC/DC converter is obtained by use of an external transformer, a transformer at the AC-side of the DC/AC converter, or a high switching based transformer on the DC side of the DC/AC converter. The high switching based transformer is typically implemented by a combination of a DC/AC converter, a transformer, and a AC/DC converter.

The power conversion system 12 is controlled by a control system 40. The control system 40 comprises several control units 42 for controlling the power conversion system 12 based on measurement signals provided from the power conversion system 12. The power conversion system 12, in particular the DC/AC converter 18, receives input from the PV panel 14, the AC power grid 16, and e.g. solar irradiance 44 in this embodiment. Furthermore, a system operator 46 may perform mode switching, e.g. to set the power conversion system 12 in a particular operation mode or to deactivate the power conversion system 12, e.g. in the case of maintenance of the AC power grid 16.

Controlling the power conversion system 12 is based measurement signals being compared to an internal control reference and on individual control parameters and/or protection parameters.

The control units 42 typically implement individual controls tasks. The control units 42 hence refer to control blocks. The physical implementation of the control blocks is independent from the provided control functionality. Hence, several control units 42 can be implemented independently within one physical control system 40.

These control tasks for solar power plants 10, which should be complied with during design and operation, can be separated into three groups comprising basic functions, which are common for every DC/AC converter 18 connected to the AC power grid 16, PV specific functions, and ancillary functions.

The basic functions typically comprise DC voltage control, current control, and grid synchronization. The PV specific functions comprise MPPT, anti-islanding protection, and grid/PV plant monitoring.

Control for the above basic functions typically relates to two main control loops. An optional external voltage loop regulates the DC link voltage in order to preserve the power balance between PV strings and the grid in presence of a two stage configuration or to perform MPPT in case of single stage. Typically PI regulators are employed to achieve the voltage/power tracking. A current loop takes care of the power quality by controlling the current injected into the grid. The current control can be done in rotating or stationary frame and is typically employed using e.g. proportional integral (PI), proportional resonant (PR), resonant control (RC), dead beat (DB) control or hysteresis based control.

The ancillary functions comprise active filter control, micro grid control, grid support, and control of sub-synchronous oscillations and harmonics.

In most countries, the solar power plants 10, also referred to as photovoltaic (PV) systems, account for a minor part of the overall generation of electrical power. Therefore, distribution and transmission system operators (DSOs/TSOs) impose basic grid requirements, also referred to as grid codes, in order to maintain the safe and secure operation of the power conversion system 12 to maintain the AC power grid 16 stable.

In some specific conditions, such as when the DSO operators have to work on the AC power grid 16, the PV systems 10 are required to disconnect from the AC power grid 16 for safety reasons, also known as anti-islanding protection. In normal operation, the PV systems 10 try to maximize the output power, known as Maximum Power Point Tracking (MPPT). However, grid conditions of the AC power grid 16 may trigger a reactive current control.

Overall, control of a solar power plant is typically requested to respect at least some of the requirements from the group of anti-islanding protection, dynamic reactive current support (± sequences), LVRT/HVRT (reverse current), centralized or decentralized reactive power management, active power curtailment, ramp rates, OVF P curtailment, a time dependent frequency disconnection procedure; harmonics at PCC (THD) according to the grid code, PVI spectrum (harmonics and interharmonics and THD) according to certification prescriptions, flicker, and islanding operation mode.

Advanced control functions of the control device 40 of the power conversion system 12 are typically implemented as separate uncoordinated blocks that get activated once grid conditions or operator demands make them required. These blocks typically do not communicate with each other and each solution is addressed independently and momentarily. Hence, there is no guarantee on optimality and signal quality.

### Disclosure of Invention

It is an object of the present invention to provide a method for control of a power conversion system of a solar power plant and a control system for a power conversion system of a solar power plant, whereby the power conversion system comprises a DC/AC converter, which is connected between at least one solar panel producing DC current and an AC power grid, which enable an improved control to enable high performance, high energy efficiency, simple handling and coverage of grid requirements posed by operators of the AC power grid.

This object is achieved by the independent claims. Advantageous embodiments are given in the dependent claims.

In particular, the present invention provides a method for control of a power conversion system of a solar power plant, whereby the power conversion system comprises a DC/AC converter, which is connected between at least one solar panel producing DC current and an AC power grid, whereby the control system comprises at least two control units comprising the steps of controlling the power conversion system based on measurement signals provided from the power conversion system compared to an internal control reference and based on individual control parameters and protection parameters using the at least two control units, receiving at least one external input from outside of the power conversion system, and controlling at least one of the control reference, the control parameters and the protection parameters of the at least two control units based on the at least one external input.

The present invention also provides a control system for a power conversion system of a solar power plant, whereby the power conversion system comprises a DC/AC converter, which is connected between at least one solar panel producing DC current and an AC power grid, whereby the control system comprises at least two control units for controlling the power conversion system based on measurement signals provided from the power conversion system compared to an internal control reference and based on individual control parameters and protection parameters, the control system comprises at least one external interface for receiving at least one external input from outside of the power conversion system, and the control system comprises a supervisory controller, which is adapted to control at least one of the control reference, the control parameters and the protection parameters of the at least two control units based on the at least one external input.

The present invention further provides a controlled power conversion system of a solar power plant for connection between at least one solar panel producing DC current and an AC power grid comprising a power conversion system comprising at least a DC/AC converter, which is connected between at least one solar panel producing DC current and an AC power grid, and a control system as specified above.

The present invention also provides a solar power plant comprising at least one solar panel producing DC current and a controlled power conversion system as specified above.

The basic idea of the invention is to provide the supervisory controller to enable processing of external input provided via the external interface. Based on the at least one external input from outside of the power conversion system, the supervisory controller modifies the control of the at least two control units. Accordingly, the control of the different control units can be modified according to particular needs of the solar power plant and/or the AC power grid. Hence, the disclosed control method and control system provide an improvement on existing state of the art control methods and systems, which do not offer such flexibility in control of the solar power plant operation.

With the supervisory control on top of the control units, a hierarchical control architecture is provided, which enables the supervisory controller to implement advanced functionalities out of the group of active filter control, AC power grid support, micro-grid control, control of sub-synchronous oscillations and harmonics.

With the present invention, different advantages can be achieved. First, an optimization of the performance can be achieved depending on a particular operating point, grid status and operator requests: Fulfillment of grid code requirements in an optimal manner can be achieved under different operating conditions. This merely required using online optimization schemes for evaluating the operating conditions and reconfiguring the control system to operate the DC/AC converter at its optimal operation point.

Furthermore, smooth transitions between operating points can be achieved. With the supervisory control, the different control units can be easily controlled under consideration of switching operations between different switching points.

Still further, fast and reliable response of the control functions of the control units can be achieved. Also under switching conditions, stable behavior of the control units can be provided.

The provided control method and control system enable robustness with respect to variations. Uncertainty conditions can also be accounted for by guaranteeing robustness margin in the operating points where grid behavior and environmental conditions are not properly known.

Finally, ancillary service capabilities can be incorporated in one optimized controller structure.

The supervisory controller is preferably provided with an optimization routine that at each point in time processes input received via the external interface. The external input may comprise operator requirements, grid and converter conditions as well as forecast information on environmental changes affecting the plant production and define the most suitable power profile that the converter has to follow. Simultaneously, the advanced power and current controls modify their response to at best meet the power requirements.

Furthermore, with the rapid growth of solar power plants, in particular low-voltage PV systems, the today's active grid codes are expected to be modified in order to accept more PV energy in the grid and ancillary services are expected to be added to the set of grid requirements. With the supervisory control of the power conversion system, such ancillary services can be easily added and modified.

According to a modified embodiment of the invention the power conversion system comprises at least one additional component out of a DC-DC converter, an integrated energy storage, a low pass filter, a grid-side energy storage and a reactive power compensation device, and the control system is adapted to commonly control the DC/AC converter and the at least one component using the at least two control units based on the at least one external input. Introducing additional components in the state of the Art typically comprises adding further control units besides the existing control units. This makes control rather complicates, in particular when control requirements of different control modules are directing in different directions.

According to a modified embodiment of the invention the supervisory controller is implemented as a model predictive controller. Model predictive controllers rely on dynamic models of the process, most often linear empirical models obtained by system identification. The main advantage of the model predictive controller (MPC) is the fact that it allows the current timeslot to be optimized, while keeping future timeslots in account. This is achieved by optimizing a finite time-horizon, but only implementing the current timeslot. MPC has the ability to anticipate future events and can take control actions accordingly. PID and LQR controllers do not have this predictive ability. MPC is nearly universally implemented as a digital control, although there is research into achieving faster response times with specially designed analog circuitry. Based on the model, the performance of the control system be can further improved

According to a modified embodiment of the invention the supervisory controller is adapted to perform a control function for controlling the at least two control units based on operation requirements, measurements, estimation and/or prediction data, the data comprising at least one out of a power forecast of the solar power plant, a grid impedance of the AC power grid, operation data from at least one further control system connected to the AC power grid, and current and voltages at a point of common coupling. The different external inputs enable provisioning of a reliable control of the solar power plant. Some of the external inputs can be preprocessed, e.g. to provide estimation or prediction data. The processed data is then provided to the supervisory controller as input for controlling the control units.

Preferably, the grid impedance estimation can adaptively support active damping functionalities including e.g. virtual impedance or LQR based active damping, to overcome system oscillations due to the presence of LCL filter or interconnections between components.

According to a modified embodiment of the invention the control function is a nonlinear function. By the use of nonlinear control functions, different control tasks can be easily implemented. The complexity can be chosen as required by adding more grades to the control function.

According to a modified embodiment of the invention the at least two control units are implemented as parameterized control units out of a group comprising a MPPT module, a power tracking module, a power control module, a current control module prediction and a grid estimation module and a solar estimation module. The modules can be implemented as part of the control system. The estimation modules can receive the at least on external input and process it accordingly to provide the estimation data. Prior to their use, the estimation modules can be provided with respective models for use in the estimation.

Sensors, irradiance and power production predictors and estimation of the electric signals varying for different grid conditions can be provided as control parameters to the control units. Adaptability to such parameters is a key feature of the control architecture and all the control units.

According to a modified embodiment of the invention the supervisory controller implements at least one advanced control functionality out of a group of control functionalities comprising active filter control, grid support, micro-grid control, sub-synchronous oscillation and harmonics control. Depending on the design of the power conversion system, different control functionality can be required. However, additional control functionality can be easily added as required. This can be important in case of changing requirements for the AC power grid.

According to a modified embodiment of the invention the control system is provided integrally with the DC/AC converter. Hence, no separate control system has to be provided, which facilitates setup of the power conversion system and the control system. DC/AC converters typically require different control functions in order to perform current conversion as required.

### Brief Description of Drawings

These and other aspects of the invention will be apparent from and elucidated with reference to the embodiments described hereinafter.

In the drawings:
- Fig. 1: shows a schematic view of a solar power plant comprising photovoltaic panels, a power conversion system and a control system as known in the Art according to a first embodiment,

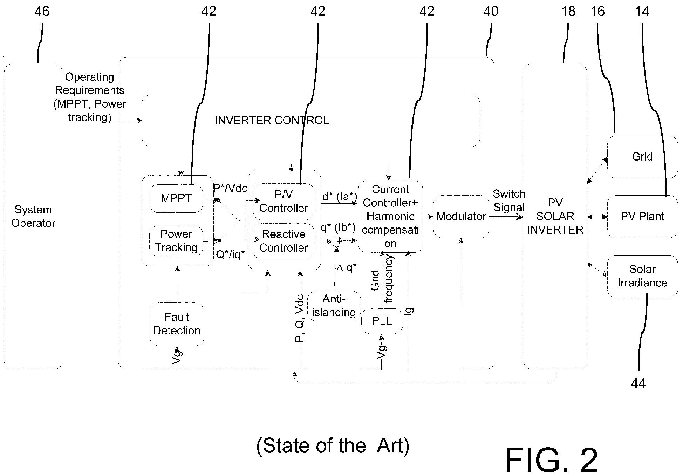

- Fig. 2: shows a schematic view of a hierarchical control architecture as known in the Art in accordance with the first embodiment,
- Fig. 3: shows a schematic view of a solar power plant comprising photovoltaic panels, a power conversion system and a control system according to a second embodiment, and
- Fig. 4: shows a schematic view of a hierarchical control architecture in accordance with the second embodiment.

### Detailed Description of the Invention

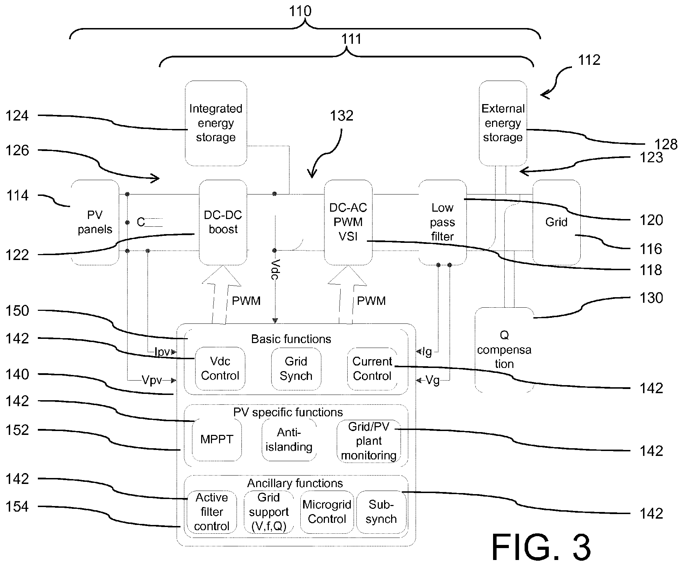

Fig. 3 shows a typical solar power plant 110 according to a second, preferred embodiment. The solar power plant 110 comprises a controlled power conversion system 111 and multiple solar panels 114 producing DC current. Only one of the solar panels 114 is shown in Fig. 3 by way of example.

The controlled power conversion system 111 comprises a power conversion system 112 together with a control system 140, which controls the power conversion system 112. The power conversion system 112 is connected between the multiple solar panels 114 and an AC power grid 116, to which the solar power is injected. The power conversion system 112 comprises at least a DC/AC converter 118, also referred to as inverter, as central component.

The power conversion system 112 comprises a low pass filter 120, which is connected between the DC/AC converter 118 and the AC power grid 116.

In this embodiment, the power conversion system 112 further comprises a DC/DC converter 122, also referred to as boost converter, which is provided between the at least one solar panel 114 and the DC/AC converter 118, and which to boosts the DC voltage level provided by the at least one solar panel 114 within an allowable range for the DC/AC converter 118. The use of the boost converter 122 offers flexibility to extract maximum power (Maximum Power Point Tracking , MPPT) from the at least one solar panel 14. A DC link 132 connects the DC/DC converter 122 and the DC/AC converter 118.

In an alternative implementation, the functionality of the DC/DC converter 122 is obtained by use of an external transformer, a transformer at an AC-side 123 of the DC/AC converter 118, or a high switching based transformer on the DC side of the DC/AC converter 118. The high switching based transformer is typically implemented by a combination of a DC/AC converter, a transformer, and a AC/DC converter.

According to the second embodiment, the power conversion system 112 further comprises an integrated energy storage 124, which is connected at a DC side 126 of the DC/AC converter 118, a grid-side energy storage 128, which is provided at the AC-side 123 of the DC/AC converter 118, and a reactive power compensation device 130, which is also provided at an AC-side 123 of the DC/AC converter 118.

The power conversion system 112 is controlled by the control system 140. The control system 140 comprises several control units 142 for controlling the power conversion system 112 based on measurement signals provided from the power conversion system 112. Controlling the power conversion system 112 is based measurement signals being compared to an internal control reference and on individual control parameters and/or protection parameters. The control parameters comprise current Ipv and voltage Upv at the solar panel 14 and grid current Ig and grid voltage Ug at the low pass filter 120.

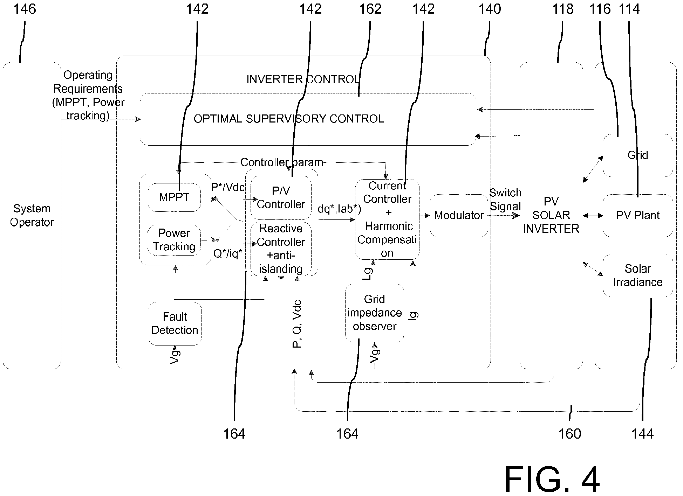

The control units 142 implement individual controls tasks. The control units 142 hence refer to control blocks, as can be seen in Fig. 4. The physical implementation of the control units 142 is independent from the provided control functionality. Hence, several control units 142 can be implemented independently within the control system 140. In this embodiment, the control system 120 is provided integrally with the DC/AC converter 118.

The different control units 142 of the control system 140 are implemented at different control levels. At a first level, functions for basic control 150 are implemented.

The control objectives of the control system are divided into two major parts according to Fig. 3: First, the DC/DC converter 122 is controlled with the purpose to extract the maximum power from the solar panel 114. This control can be performed e.g. under consideration of mission profiles including ambient temperature and solar irradiance. Second, the DC/AC converter 118 is controlled with the purpose to fulfill the basic control 150. Thus, this basic control 150 in this embodiment comprises the tasks control of the active power delivered to the AC power grid 116, control of a DC link voltage at the DC link 132 between the DC/DC converter 122 and the DC/AC converter 118, control of the reactive power exchange with the AC power grid 116, high efficiency and high quality of the injected power, AC power grid 116 synchronization, anti-islanding protection, and proper closure of the machine circuit breaker.

Furthermore, advanced control 152 comprises functions including LVRT/HVRT capabilities, with control of negative or reverse current, power profile adaptation, harmonic compensation, equalization of three-phase voltages, which are fully achievable in presence of four wires inverters, and partial or full participation to the primary control. The former could be achieved through delta control or through the storage. Synthetic inertia functions can be used to dynamically improve a response of the frequency regulation, and stabilization of power system oscillations (PSS function).

The control architecture of the control system 140 according to the second embodiment is depicted in Fig. 4. The control system 140 comprises an external interface 160 for receiving external input from outside of the power conversion system 112.'In this embodiment, the external input is input from the PV panel 114, the AC power grid 116, and e.g. solar irradiance 144. Furthermore, a system operator 146 can influence the control system 140. Hence, the external input comprises operator requirements, grid and converter conditions as well as forecast information, e.g. on environmental changes affecting the plant production and define the most suitable power profile that the converter has to follow.

As can be seen, the control system 140 of the second embodiment comprises four main modules. First, the control system 140 comprises a supervisory controller 162. The supervisory controller 162 generates based on the external input from outside of the power conversion system 112 received via the external interface 160 an optimal reference in the optimal reference generation module 164. The optimal reference generation module 164 also generates controllers parameters online during operation. The optimal reference and the controllers parameters are hence controlled by the supervisory controller 162 via the optimal reference generation module 164. In this embodiment, control of optimal reference and controller parameters is done for P/V controller and the reactive control/anti islanding control.

The optimal reference generation module 164 is provided with an optimization routine that at each point in time takes in system operator 146 requirements, AC power grid 116 conditions and converter 118, 122 conditions as well as forecast information on environmental changes affecting the production of the solar power plant 110. The optimization routine e.g. defines a most suitable power profile that the DC/AC converter 118 has to follow. Simultaneously, advanced power and current control modifies the output to meet power requirements of the AC power grid 116.

With the supervisory controller 162, the different control units 142 are also controlled under consideration of switching operations between different switching points.

The supervisory controller 162 is preferably provided with an optimization routine that at each point in time processes input received via the external interface160.

The supervisory controller 162 is implemented as a model predictive controller and, as described above, is adapted to perform a control function for controlling the control units 142 based on operation requirements, measurements, estimation and/or prediction data, the data comprising a power forecast of the solar power plant 110, a grid impedance of the AC power grid 116, operation data from at least one further control system 140 connected to the AC power grid 116, and current and voltages at a point of common coupling (PCC). The control function of the supervisory controller 162 is a nonlinear function.

The supervisory controller 162 implements advanced control functionality comprising active filter control, grid support, micro-grid control, sub-synchronous oscillation and harmonics control.

Second, the control system 140 comprises a control unit 142 for performing reactive power generation using the reactive power compensation device 130.

Third, the control system 140 comprises a current controller as control unit 142.

Fourth, the control system 140 comprises a grid estimator 166, also referred to as grid impedance estimation unit as further control unit. The grid estimator 166 adaptively supports active damping functionalities including e.g. virtual impedance or LQR based active damping, to overcome system oscillations due to the presence of LCL filters or interconnections between components.

The above control units 142 are implemented as parameterized control units 142. out of a group comprising a MPPT module, a power tracking module, a power control module, a current control module prediction and a grid estimation module and a solar estimation module.

With the supervisory controller 162 on top of the control units 142, a hierarchical control architecture is provided, which enables the supervisory controller 162 to implement advanced functionalities as described above. Hence, these advanced functionalities comprise active filter control, AC power grid support, micro-grid control, control of sub-synchronous oscillations and harmonics.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 10: solar power plant (state of the Art)
- 12: power conversion system (state of the Art)
- 14: solar panel (state of the Art)
- 16: AC power grid (state of the Art)
- 18: DC/AC converter (state of the Art)
- 20: low pass filter (state of the Art)
- 22: DC/DC converter (state of the Art)
- 32: DC link (state of the Art)
- 40: control system (state of the Art)
- 42: control unit (state of the Art)
- 44: solar irradiance
- 46: system operator
- 110: solar power plant
- 111: controlled power conversion system
- 112: power conversion system
- 114: solar panel
- 116: AC power grid
- 118: DC/AC converter
- 120: low pass filter
- 122: DC/DC converter
- 123: AC side
- 124: integrated energy storage
- 126: DC side
- 128: grid-side energy storage
- 130: reactive power compensation device
- 132: DC link
- 140: control system
- 142: control unit
- 144: solar irradiance
- 146: system operator
- 150: basic control
- 152: PV specific control
- 154: ancillary control
- 160: external interface
- 162: supervisory controller
- 164: optimal reference generation module
- 166: grid estimator

## Claims

1. Method for control of a power conversion system (112) of a solar power plant (110), whereby the power conversion system (112) comprises a DC/AC converter (114), which is connected between at least one solar panel (116) producing DC current and an AC power grid (118) using a control system (140), whereby
the control system (140) comprises at least two control units (142),
comprising the steps of
controlling the power conversion system (112) based on measurement signals provided from the power conversion system (112) compared to an internal control reference and based on individual control parameters and protection parameters using the at least two control units (142),
receiving at least one external input from outside of the power conversion system (112), and
controlling at least one of the control reference, the control parameters and the protection parameters of the at least two control units (142) based on the at least one external input.

2. Control system (140) for a power conversion system (112) of a solar power plant (110), whereby the power conversion system (112) comprises a DC/AC converter (118), which is connected between at least one solar panel (114) producing DC current and an AC power grid (116), whereby
the control system (140) comprises at least two control units (142) for controlling the power conversion system (112) based on measurement signals provided from the power conversion system (112) compared to an internal control reference and based on individual control parameters and protection parameters,
**characterized in that**
the control system (140) comprises at least one external interface (160) for receiving at least one external input from outside of the power conversion system (112), and
the control system (140) comprises a supervisory controller (162), which is adapted to control at least one of the control reference, the control parameters and the protection parameters of the at least two control units (142) based on the at least one external input.

3. Control system (140) according to claim 2,
**characterized in that**
the power conversion system (112) comprises at least one additional component out of a DC-DC converter (122), an integrated energy storage (124), a low pass filter (120), a grid-side energy storage (128) and a reactive power compensation device (130), and
the control system (140) is adapted to commonly control the DC/AC converter (118) and the at least one component using the at least two control units (142) based on the at least one external input.

4. Control system (140) according to any of preceding claims 2 or 3,
**characterized in that**
the supervisory controller (162) is implemented as a model predictive controller.

5. Control system (140) according to any of preceding claims 2 to 4,
**characterized in that**
the supervisory controller (162) is adapted to perform a control function for controlling the at least two control units (142) based on operation requirements, measurements, estimation and/or prediction data, the data comprising at least one out of a power forecast of the solar power plant, a grid impedance of the AC power grid (116), operation data from at least one further control system (140) connected to the AC power grid (116), and current and voltages at a point of common coupling.

6. Control system (140) according to preceding claim 5,
**characterized in that**
the control function is a nonlinear function.

7. Control system (140) according to any of preceding claims 2 to 6,
**characterized in that**
the at least two control units (142) are implemented as parameterized control units (142) out of a group comprising a MPPT module, a power tracking module, a power control module, a current control module prediction and a grid estimation module and a solar estimation module.

8. Control system (140) according to any of preceding claims 2 to 7,
**characterized in that**
the supervisory controller (162) implements at least one advanced control functionality out of a group of control functionalities comprising active filter control, grid support, micro-grid control, sub-synchronous oscillation and harmonics control.

9. Controlled power conversion system (111) of a solar power plant (110) for connection between at least one solar panel (114) producing DC current and an AC power grid (116) comprising
a power conversion system (112) comprising at least a DC/AC converter (118), which is connected between at least one solar panel (114) producing DC current and an AC power grid (116), and
a control system (140) according to any of preceding claims 2 to 8.

10. Controlled power conversion system (111) according to preceding claim 9,
**characterized in that**
the control system (140) is provided integrally with the DC/AC converter (118).

11. Solar power plant (110) comprising
at least one solar panel (114) producing DC current and
a controlled power conversion system (111), according to any of preceding claims 9 or 10.
